Europäisches Patentamt

European Patent Office

Office européen des brevets

(19)

(11)    EP 0 855 809 B1

(12)    **FASCICULE DE BREVET EUROPEEN**

(45) Date de publication et mention
de la délivrance du brevet:
**27.12.2000   Bulletin 2000/52**

(51) Int Cl.$^7$: **H04B 10/12**

(21) Numéro de dépôt: **98400109.9**

(22) Date de dépôt: **21.01.1998**

(54) **Source optique millimétrique destinée à un réseau de distribution de type radio sur fibre**

Millimeterwellen optische Quelle für ein radio-über-Faser Verteilungsnetzwerk

Millimetric optical source for a radio-over-fibre distribution network

(84) Etats contractants désignés:
**DE GB**

(30) Priorité:  **23.01.1997  FR 9700670**

(43) Date de publication de la demande:
**29.07.1998   Bulletin 1998/31**

(73) Titulaire: **FRANCE TELECOM**
**75015 Paris (FR)**

(72) Inventeurs:
• **Mathoorasing, Dean**
**92130 Issy-Les-Moulineaux (FR)**
• **Kazmierski, Christophe**
**91420 Morangis (FR)**

(74) Mandataire: Dubois-Chabert, Guy
**Société de Protection des Inventions**
**3, rue du Docteur Lanceraux**
**75008 Paris (FR)**

(56) Documents cités:
• **SCHMUCK H: "COMPARISON OF OPTICAL MILLIMETRE-WAVE SYSTEM CONCEPTS WITH REGARD TO CHROMATIC DISPERSION" ELECTRONICS LETTERS, vol. 31, no. 21, 12 octobre 1995, page 1848/1849 XP000553336**
• **WAKE D ET AL: "OPTICAL GENERATION OF MILLIMETER-WAVE SIGNALS FOR FIBER-RADIO SYSTEMS USING A DUAL-MODE DFB SEMICONDUCTOR LASER" IEEE TRANSACTIONS ON MICROWAVE THEORY AND TECHNIQUES, vol. 43, no. 9, PART 02, 9 octobre 1995, pages 2270-2276, XP000524215**
• **SCHMUCK H ET AL: "DISTRIBUTION OF 60GHZ SIGNALS TO MORE THAN 1000 BASE STATIONS" ELECTRONICS LETTERS, vol. 30, no. 1, 6 janvier 1994, page 59/60 XP000424697**
• **PATENT ABSTRACTS OF JAPAN vol. 017, no. 434 (E-1412), 11 août 1993 & JP 05 091046 A (NEC CORP), 9 avril 1993,**

## Description

## DOMAINE TECHNIQUE

La présente invention concerne une source optique millimétrique destinée à un réseau de distribution de type radio sur fibre ("radio over fiber").

Elle s'applique notamment à la distribution de services de télécommunication à large bande à un groupe d'abonnés ou à plusieurs groupes d'abonnés.

## ÉTAT DE LA TECHNIQUE ANTÉRIEURE

Actuellement, plusieurs techniques sont couramment étudiées par les chercheurs : le laser en modulation directe (voir le document (1)), le modulateur externe (voir les documents (2) et (3)), le laser en blocage de mode (voir les documents (4) et (5)) et le laser en mode dual (voir le document (6)).

Ces documents (1) à (6), auxquels on se reportera, sont mentionnés à la fin de la présente description.

Le laser, bien que limité en bande passante (cette bande passante est inférieure à 30 GHz), a montré aussi des potentialités en génération d'harmoniques et en mélange (modulation indirecte) jusqu'à 40 GHz (voir le document (1)).

La technique décrite dans ce document (1) consiste à moduler le courant polarisant le laser par deux signaux dont l'un a une fréquence subharmonique de la porteuse millimétrique à générer et l'autre est par exemple un signal numérique.

Du fait de la non linéarité du laser, le signal numérique est ainsi transposé sur la porteuse millimétrique avec une bonne efficacité.

Avec les modulateurs, du fait de leur bande passante supérieure à 40 GHz, il est possible de générer les ondes millimétriques soit par la modulation externe directe soit par la modulation externe indirecte (voir les documents (2) et (3)).

En modulation indirecte, cette technique est similaire à celle qui est utilisée pour le laser sauf que, dans le cas du modulateur, on module la tension.

En modulation directe, la fréquence de modulation est égale à la fréquence de la porteuse millimétrique.

Une autre technique connue utilise le laser en blocage de mode.

Dans ce cas, le laser est modulé autour de la fréquence de la cavité laser.

Une quatrième technique qui est le prolongement de la modulation indirecte dans le cas du modulateur, consiste à moduler un modulateur externe et à filtrer optiquement le spectre émis.

Dans un cas, on peut moduler à une fréquence f/2 et filtrer la porteuse optique et dans l'autre cas, on peut moduler à la fréquence f et filtrer l'une des bandes latérales.

La dernière technique connue consiste à utiliser un laser à deux modes (voir le document (6)).

Dans ce cas, le laser, lorsqu'il est polarisé, émet la lumière sur deux modes distincts.

L'écart entre les deux longueurs d'onde associées à ces deux modes correspond à la fréquence millimétrique.

Il est possible de synchroniser l'oscillateur libre constitué par ce laser en le modulant très fortement.

Ces techniques connues présentent des inconvénients.

Dans les réseaux connus, la dispersion des fibres optiques est de 17 ps/nm/km.

Du fait de la modulation de phase inhérente à la modulation d'amplitude dans des semi-conducteurs, cette modulation de phase, combinée à la dispersion, module l'amplitude du signal d'une façon décrite par les fonctions de Bessel.

De ce fait, à certaines longueurs de fibre, la puissance de la modulation ainsi détectée électriquement est fortement atténuée.

La plupart des techniques mentionnées plus haut souffrent de la limitation de la dispersion, sauf les deux dernières techniques citées.

Dans le cas du modulateur, en modulation directe, il faut disposer de la fréquence millimétrique et d'une puissance suffisante, ce qui est assez onéreux lorsque la fréquence est supérieure à 20 GHz.

En modulation indirecte, ce modulateur est modulé dans sa zone non linéaire par une subharmonique de la fréquence à générer.

L'efficacité de modulation est réduite.

La dispersion limite l'utilisation d'un modulateur sur des distances inférieures à 5 km.

D'autre part, il est nécessaire de compenser les pertes de couplage par un amplificateur optique.

Afin d'obtenir une puissance suffisante, l'ordre de l'harmonique ne doit pas être élevé.

Dans le cas du laser, l'ordre de l'harmonique peut aller jusqu'à 8 avec une bonne efficacité, permettant ainsi de réduire la fréquence de modulation.

Cependant, bien que les pics d'atténuation se trouvent espacés de 13 km à 38 GHz, le premier pic existe entre 0 et 3 km, ce qui est gênant pour l'utilisation du laser dans les réseaux connus.

La dispersion reste le facteur prédominant qui limite l'utilisation du laser.

Dans le cas du laser utilisé en blocage de mode, la plage d'accrochage étant généralement faible, les risques de décrochage sont importants avec les variations de température.

La technique qui consiste à supprimer la porteuse optique est plus complexe car elle nécessite une contre-réaction pour synchroniser la longueur d'onde avec un filtre.

D'autre part, elle reste sensible aux variations de température et un problème non résolu de stabilité de la puissance électrique détectée (voir le document (2)) subsiste dans cette configuration.

La technique du laser bimode est peu sensible à la dispersion mais présente l'inconvénient de conduire à une largeur de raie équivalente correspondant à la convolution des deux raies et d'être sensible aux variations de température.

D'autre part, il est possible de synchroniser la fréquence de battement résultante par une fréquence subharmonique avec une puissance très élevée.

Cette synchronisation reste sensible aux variations de température car les risques de décrochage (bande d'accrochage faible) sont importants.

ELECTRONICS LETTERS, vol.31, n°21, 12 octobre 1995, pages 1848 à 1849 compare les effets de la dispersion chromatique sur différents systèmes à ondes millimétriques optiques.

## EXPOSÉ DE L'INVENTION

La présente invention associe principalement un laser (de préférence monomode) à un milieu dispersif ayant un coefficient de dispersion β" en vue de réaliser une source optique millimétrique peu sensible à la dispersion des fibres qui suivent la source dans un réseau de distribution de type radio sur fibre qui est capable de véhiculer des données de format quelconque (16QAM, QPSK ou autres) d'un point à un autre ou d'un point à plusieurs points sur des distances supérieures à 15 km pour une porteuse à 38 GHz et supérieures à 20 km pour une porteuse à 28 GHz.

Avec cette source, la distribution sur fibre des signaux millimétriques portant des données est possible pour des points même nonéquidistants.

Cette source est peu sensible aux variations de température.

La puissance électrique détectée ne diminue que d'environ 3 dB pour une augmentation de température de l'ordre de 10°C.

La contrainte de dispersion étant levée, l'invention simplifie considérablement la conception de la source optique par comparaison aux sources connues.

L'invention permet aussi une mise en oeuvre rapide de cette source.

Le réseau de distribution peut utiliser une fibre optique standard (G652) comme support de transmission pour véhiculer un signal millimétrique avec des données avant que ce signal soit émis par une ou plusieurs antennes rayonnant vers les abonnés au réseau.

La source optique millimétrique peut fonctionner au moins jusqu'à 60 GHz, par exemple dans la gamme allant de 20 GHz à 60 GHz.

Un amplificateur de transimpédance peut être intégré au laser de la source afin de réduire les pertes de couplage électrique et augmenter ainsi l'efficacité de la source optique.

De façon précise, la présente invention a pour objet une source optique millimétrique conformément à la revendication 1.

Selon un premier mode de réalisation particulier de la source objet de l'invention, le milieu dispersif est optiquement couplé au laser de manière directe.

Selon un deuxième mode de réalisation particulier, le milieu dispersif est optiquement couplé au laser de manière indirecte, au moins un composant optique étant inséré dans la fibre et le milieu dispersif étant associé à ce composant optique.

Le composant optique peut être choisi parmi un coupleur optique, un amplificateur optique et un modulateur optique.

De préférence, le laser est monomode.

La fréquence de la porteuse peut être inférieure ou égale à 60 GHz.

Cette fréquence peut être comprise dans le domaine allant de 20 GHz à 60 GHz.

Les moyens de commande du laser peuvent comprendre en outre un générateur de données sous forme électrique de manière à pouvoir transposer optiquement les données sur la porteuse millimétrique générée optiquement.

Le coefficient de dispersion du milieu dispersif peut être environ égal à 60 ps/nm.

On rappelle que le coefficient de dispersion β" du milieu est tel que :

$$\beta" = \frac{1}{2\pi} \cdot \frac{d^2\beta}{d\nu^2}$$

β étant la constante de propagation relative à ce milieu et ν la fréquence du laser.

La source objet de l'invention peut comprendre en outre un amplificateur électrique par l'intermédiaire duquel les moyens de commande du laser commandent celui-ci, pour augmenter l'efficacité électrique de cette source.

La source objet de l'invention est susceptible d'être très compacte et permet des liaisons sur une fibre optique standard jusqu'à au moins 15 km.

Le milieu dispersif peut faire partie intégrante du laser ou peut être une fibre optique de dispersion ayant une longueur appropriée.

## BRÈVE DESCRIPTION DES DESSINS

La présente invention sera mieux comprise à la lecture de la description d'exemples de réalisation donnés ci-après, à titre purement indicatif et nullement limitatif, en faisant référence aux dessins annexés sur lesquels :

- la figure 1 est une vue schématique d'un mode de réalisation particulier de la source objet de l'invention,
- la figure 2 montre les variations de la puissance P de la porteuse à 28 GHz (courbe A) et à 38 GHz (courbe B) respectivement pour diverses longueurs L de fibre, et

- les figures 3 à 5 sont des vues schématiques d'autres modes de réalisation particuliers de la source objet de l'invention.

## EXPOSÉ DÉTAILLÉ DE MODES DE RÉALISATION PARTICULIERS

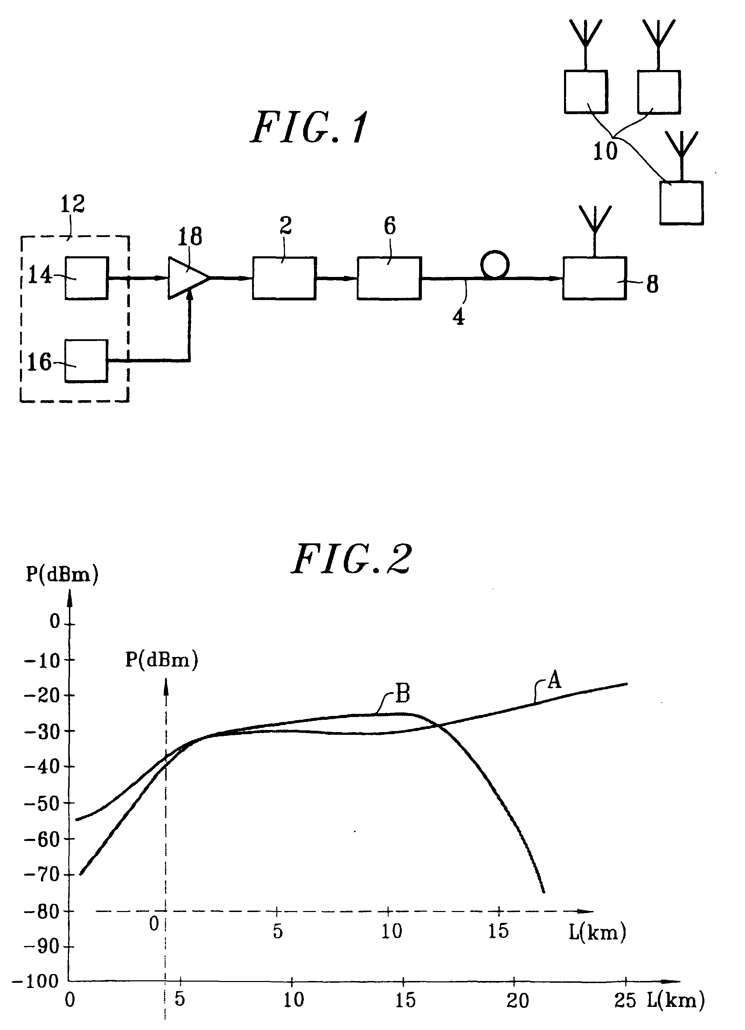

La source optique conforme à l'invention, qui est schématiquement représentée sur la figure 1, comprend un laser monomode 2 qui est optiquement couplé à une extrémité d'une fibre optique 4, par exemple une fibre standard de type G652.

La source de la figure 1 comprend aussi un milieu dispersif 6 qui est directement couplé au laser 2 de sorte que la lumière émise par celui-ci traverse ce milieu dispersif 6 avant de passer dans la fibre 4.

L'autre extrémité de la fibre 4 est reliée à des moyens 8 qui convertissent sous forme électrique les signaux optiques transportés par la fibre 4 et qui émettent ces signaux sous forme de signaux radio.

Ces signaux radio sont captés par divers abonnés 10.

Ainsi la fibre 4 distribue des signaux radio sur fibre.

La source de la figure 1 comprend aussi des moyens 12 de commande du laser 2.

Ces moyens 12 comprennent un générateur électrique radiofréquence 14 qui commande le laser 2 pour que ce laser engendre une porteuse millimétrique ayant une phase déterminée.

Le générateur 14 module le laser par une fréquence subharmonique de la fréquence millimétrique que l'on veut engendrer.

Le milieu dispersif 6 associé au laser sert à décaler la phase de la porteuse et donc le premier pic d'absorption qui apparaît au début de la fibre 4 de type G652.

Les moyens de commande 12 comprennent aussi un générateur 16 de données binaires ou analogiques sous forme électrique pour transposer ces données sur la porteuse.

De plus, le laser est commandé par l'intermédiaire d'un amplificateur électrique 18, par exemple un amplificateur de transimpédance, qui reçoit les signaux électriques émis par le générateur 14 et les données sous forme électrique, émises par le générateur 16.

Le milieu dispersif 6, dont le coefficient de dispersion vaut par exemple 60 ps/nm, peut faire partie intégrante du laser 2 ou peut être constitué par une fibre de dispersion.

Grâce à l'invention, la puissance électrique détectée en aval de la fibre 4 est peu sensible à la dispersion présente dans cette fibre.

L'amplificateur 18 permet de réduire les pertes électriques par réflexion et augmente l'efficacité de la source.

On voit sur la figure 2 les variations de la puissance P de la porteuse à 28 GHz (courbe A) et à 38 GHz (courbe B) respectivement pour diverses longueurs L de fibre G652.

La fréquence de modulation électrique est de 7 GHz pour 28 GHz et de 9,5 GHz pour 38 GHz et la puissance de modulation vaut 3 dBm à l'entrée de l'amplificateur.

Il n'y a pas de milieu dispersif.

On observe un pic d'absorption de la puissance électrique radiofréquence détectée à 38 GHz entre 0 et 3 km et un autre pic vers 18 km.

Entre 4 et 18 km cette puissance radiofréquence à 38 GHz reste quasiment constante.

Du fait de la modulation de phase inhérente à la modulation d'amplitude, cette modulation de phase, combinée à la dispersion, module l'amplitude du signal de la façon décrite par les fonctions de Bessel.

A certaines longueurs de fibre et en fonction de la puissance de modulation radiofréquence, la fréquence générée est atténuée fortement.

L'atténuation de la porteuse millimétrique a une période optique de 13 km à 38 GHz et supérieure à 20 km à 28 GHz.

A 38 GHz, cette période est de 20 km si la fréquence subharmonique de modulation vaut 7,6 GHz.

Conformément à l'invention, on ajoute le milieu dispersif qui conduit à une dispersion équivalente de 3 à 4 km pour décaler fictivement le premier pic d'absorption vers les distances négatives.

Ceci est schématiquement illustrée par les axes en pointillés de la figure 2 qui matérialisent le décalage de l'origine et donc du pic d'absorption.

D'autres modes de réalisation de l'invention sont possibles, dans lesquels le laser est couplé de manière indirecte au milieu dispersif.

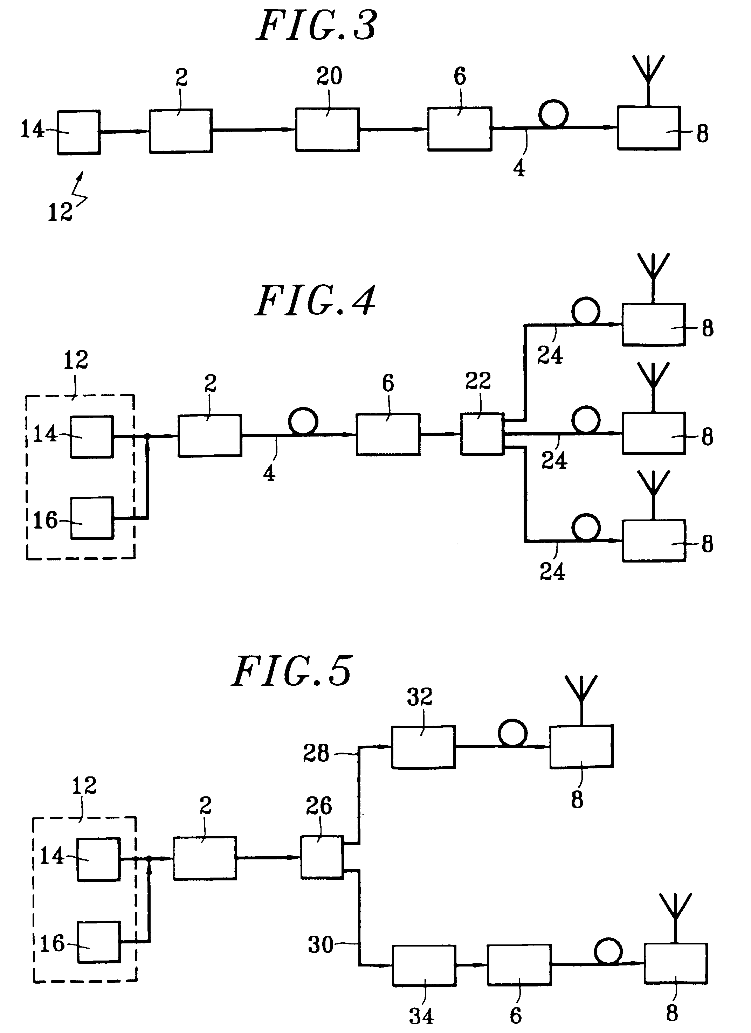

La source conforme à l'invention, qui est schématiquement représentée sur la figure 3, diffère de celle de la figure 1 par le fait que le laser est seulement commandé par le générateur 14, sans amplificateur intermédiaire, et couplé au milieu dispersif 6 par l'intermédiaire d'un modulateur optique 20 qui est directement couplé au milieu 6 et qui transpose les données sur la porteuse millimétrique engendrée par le laser 2.

La source conforme à l'invention, qui est schématiquement représentée sur la figure 4, diffère de celle de la figure 1 par le fait que le milieu dispersif 6 est placé à l'autre extrémité de la fibre 4 et directement couplé à un coupleur optique 22 de type 1 vers N, N étant égal à 3 dans l'exemple représenté, pour que les signaux issus du laser 2 puissent être injectés en des extrémités de N fibres optiques 24 dont les autres extrémités sont respectivement reliées à des moyens d'émission radio 8 identiques aux moyens 8 utilisés dans le cas de la figure 1.

Dans le cas de la figure 5, le laser 2 est commandé par le générateur 12 de la figure 1 et directement couplé à un coupleur optique 26 de type 1 vers 2 d'où partent deux fibres optiques 28 et 30.

La fibre 28 est reliée à des moyens d'émission radio 8 par l'intermédiaire d'un amplificateur optique 32.

La fibre 30 est aussi reliée à des moyens d'émission radio 8 par l'intermédiaire d'un amplificateur optique 34 et du milieu dispersif 6 qui est directement couplé à cet amplificateur.

Les documents cités dans la présente description sont les suivants :

(1) D. Mathoorasing, J.F. Cadiou, C. Kazmierski, E. Penard, P. Legaud and J. Guena, "38 GHz optical harmonic mixer for millimetre-wave radiowave systems", Electron. Lett., 1995, 31, pp 970-971

(2) H. Schmuk, R. Heidmann, R. Hofstetter, "Distribution of 60 GHz signals to more than 1000 base stations", Electron. Lett., vol.30, n°1, pp 59-60, 1994

(3) J.F. Cadiou et al , "Les composants pour conversion optique-radio" SEE, journée d'études, 1996

(4) D.Y. Kim, M. Pelusi, Z. Ahmed, D. Novak, H.F. Liu and Y. Ogawa, "Ultrastable millimetre-wave signal generation using hybrid modelocking of a monolithic DBR laser", Electron. Lett., 1995, 31, pp 733-734

(5) D. Novak and R. S. Tucker, "Millimetre-wave signal generation using pulsed semiconductors", Electron. Lett., 1994, 30, pp 1430-1431

(6) D. Wake, Claudio R. Limaand Philip A. Davies, "Optical generation of millimeter-wave signals for fiber-radio systems using a dual-mode DFB semiconductor laser", IEEE Trans. Microwave Theory Tech., vol.43, 1995, pp 2270-2276

**Revendications**

1. Source optique millimétrique comprenant un laser (2) qui est optiquement couplé à au moins une fibre optique, cette fibre optique étant destinée à la distribution de signaux radio sur fibre, la source étant caractérisée en ce qu'elle comprend en outre:

   - des moyens (12) de commande du laser qui comprennent un générateur électrique radiofréquence (14) de façon que ce laser engendre une porteuse millimétrique ayant une phase déterminée, cette porteuse millimétrique étant alors envoyée dans la fibre optique, et
   - un milieu dispersif (6) qui est optiquement couplé au laser et apte à décaler la phase de la porteuse et donc un pic d'absorption apparaissant dans la fibre optique de manière que la source soit peu sensible à la dispersion de la fibre.

2. Source selon la revendication 1, dans laquelle le milieu dispersif (6) est optiquement couplé au laser de manière directe.

3. Source selon la revendication 1, dans laquelle le milieu dispersif (6) est optiquement couplé au laser de manière indirecte, au moins un composant optique étant inséré dans la fibre et le milieu dispersif étant associé à ce composant optique.

4. Source selon la revendication 3, dans laquelle le composant optique est choisi parmi un coupleur optique (22), un amplificateur optique (34) et un modulateur optique (20).

5. Source selon l'une quelconque des revendications 1 à 4, dans laquelle le laser (2) est monomode.

6. Source selon l'une quelconque des revendications 1 à 5, dans laquelle la fréquence de la porteuse est inférieure ou égale à 60 GHz.

7. Source selon la revendication 6, dans laquelle la fréquence de la porteuse est comprise dans le domaine allant de 20 GHz à 60 GHz.

8. Source selon l'une quelconque des revendications 1 à 7, dans laquelle les moyens (12) de commande du laser comprennent en outre un générateur (16) de données sous forme électrique de manière à pouvoir transposer optiquement les données sur la porteuse millimétrique générée optiquement.

9. Source selon l'une quelconque des revendications 1 à 8, dans laquelle le coefficient de dispersion du milieu dispersif (6) est environ égal à 60 ps/nm.

10. Source selon l'une quelconque des revendications 1 à 9, comprenant en outre un amplificateur électrique (18) par l'intermédiaire duquel les moyens (12) de commande du laser (2) commandent celui-ci.

**Claims**

1. Millimetre-wave optical source comprising a laser (2) optically coupled top at least one optical fibre, this optical fibre being intended to distribute radio signals over fibre, the source being characterized in that it also comprises means (12) of laser control which comprise an electric radio frequency generator (14) so that this laser generates a millimetre-wave carrier having a determined phase, this millimetre-wave carrier being subsequently sent in the optical fibre, and a dispersive medium (6) which is optically coupled to the laser and able to delay the carrier phase and consequently an absorption peak appearing in the optical fibre, in such manner that the source is little sensitive to the dispersion of the fibre.

2.  Source in accordance with claim 1, in which the dispersive medium (6) is optically coupled to the laser in direct manner.

3.  Source in accordance with claim 1, in which the dispersive medium (6) is optically coupled to the laser in indirect manner, at least one optical component being inserted in the fibre and the dispersive medium being associated with this optical component.

4.  Source in accordance with claim 3, in which the optical component is chosen from an optical coupler (22), an optical amplifier (34) and an optical modulator (20).

5.  Source in accordance with any one of the claims 1 to 4, in which the laser (2) is single-mode.

6.  Source in accordance with any one of the claims 1 to 5, in which the frequency of the carrier is 60 GHz or less.

7.  Source in accordance with claim 6, in which the frequency of the carrier lies in the region ranging from 20 GHz to 60 GHz.

8.  Source in accordance with any one of the claims 1 to 7, in which the means (12) of laser control also comprise a generator (16) of data in electric form in such manner as to be able to optically transpose the data on the optically generated millimetre-wave carrier.

9.  Source in accordance with any one of the claims 1 to 8, in which the dispersion ratio of the dispersive medium (6) is approximately 60 ps/nm.

10. Source in accordance with any one of the claims 1 to 9, further comprising an electric amplifier (18) via which the laser control means (12) control the laser.

**Patentansprüche**

1.  Optische Millimeterwellen-Quelle mit

   einem Laser (2), der mit mindestens einer optischen Faser bzw. Lichtleitfaser optisch gekoppelt ist, wobei diese optische Faser zur Übertragung von Radiosignalen über Faser vorgesehen ist und die Quelle dadurch gekennzeichnet ist, daß sie ferner umfaßt:
   eine Einrichtung (12) zum Steuern des Lasers, die einen elektrischen Radiofrequenzgenerator (14) aufweist, so daß der Laser eine Millimeter-Trägerwelle mit einer bestimmten Phase erzeugt und diese Millimeter-Trägerwelle dann in die optische Faser eingeleitet wird, und
ein streuendes Milieu bzw. Streuelement (6), das mit dem Laser optisch gekoppelt ist und in der Lage ist, die Phase der Trägerwelle und damit ein in der optischen Faser auftretendes Absorptionsmaximum so zu verschieben, daß die Quelle hinsichtlich der Streuung der Faser wenig empfindlich ist.

2.  Quelle gemäß Anspruch 1, wobei das Streuelement (6) auf direkte Art und Weise optisch mit dem Laser gekoppelt ist.

3.  Quelle gemäß Anspruch 1, wobei das Streuelement (6) auf indirekte Art und Weise optisch mit dem Laser gekoppelt ist, wobei mindestens ein optisches Bauteil in die Faser eingesetzt und das Streuelement diesem optischen Bauteil zugeordnet ist.

4.  Quelle gemäß Anspruch 3, wobei das optische Bauteil aus einem optischen Koppler (22), einem optischen Verstärker (34) und einem optischen Modulator (20) ausgewählt ist.

5.  Quelle gemäß einem der Ansprüche 1 bis 4, wobei der Laser (2) ein Einmoden-Laser ist.

6.  Quelle gemäß einem der Ansprüche 1 bis 5, wobei die Frequenz der Trägerwelle kleiner gleich 60 GHz ist.

7.  Quelle gemäß Anspruch 6, wobei die Frequenz der Trägerwelle im Bereich von 20 GHz bis 60 GHz liegt.

8.  Quelle gemäß einem der Ansprüche 1 bis 7, wobei die Steuereinrichtung (12) des Lasers ferner einen Generator (16) von Daten in elektrischer Form umfaßt, so daß die Daten auf die (bzw. auf der) optisch erzeugte(n) Millimeter-Trägerwelle optisch übertragen werden können.

9.  Quelle gemäß einem der Ansprüche 1 bis 8, wobei der Streuungskoeffizient des streuenden Milieus (6) annähernd gleich 60 ps/nm ist.

10. Quelle gemäß einem der Ansprüche 1 bis 9, ferner mit einem elektrischen Verstärker (18), durch den die Steuereinrichtung (12) des Lasers (2) letzteren steuert.

# FIG.1

# FIG.2

# FIG.3

# FIG.4

# FIG.5